# EUROPEAN PATENT SPECIFICATION

(11) **EP 0 726 029 B1**
(45) Date of publication and mention of the grant of the patent: **07.03.2001**
(21) Application number: 96100314.2
(22) Date of filing: 11.01.1996
(51) Int. Cl.: A23G 9/22, A23G 9/08, A23G 9/16

(54) **Loading device for ice-cream making machines of the batch type**
Ladevorrichtung für Chargenspeisemaschine
Dispositif d'alimentation de machine à crèmes glacées du type par fournée

(30) Priority: 18.01.1995 IT GE950005
(43) Date of publication of application: 14.08.1996
(73) Proprietor: CARPIGIANI GROUP-ALI S.p.A., 40011 Anzola Emilia (Bologna) (IT)
(72) Inventor: Cocchi, Gino, I-40137 Bologna (IT); Pietra, Giancarlo, I-40050 Castello di Serravalle, Bologna (IT)
(74) Representative: Porsia, Attilio, Dr.

(56) References cited:
- EP-A- 0 141 694
- EP-A- 0 445 396
- EP-A- 0 495 211
- US-A- 4 216 917
- US-A- 4 371 118
- US-A- 4 470 788
- US-A- 4 629 131
- US-A- 4 911 331

## Description

The present invention relates to ice-cream making machines and in particular relates to a loading device for ice-cream making machines of the batch type, equipped with a loading hopper.

The making of ice-creams with such machines may necessitate the addition of specific components to the whipping cylinder in the course of the operation and at advanced operation. This is particularly true in respect of chopped solids such as pieces of candied fruit, nuts or the like. Such subsequent addition is however complicated to perform, given that, for obvious safety reasons it is laid down that the hoppers for loading the cylinders of such machines must be fitted with protection grilles, able to prevent the introduction of the fingers of the hands into the working area. To solve the problem stated above, thought has been given to constructing such grilles in such a way that they are hinged to the entrance of the hopper along one of their sides, and that the shifting of the grille from its position obstructing the loading aperture of the hopper should bring about the interruption of the supply of electrical current to the machine, the said grille being connected to suitable switching means. As soon as the grille is put back in the original position, the operation of the machine resumes normally. However, such a solution has a few drawbacks; indeed, in many of the machines currently in use for the making of ice-creams, a pasteurizer, whose delivery means emerge directly above the hopper for loading the said cylinder, is generally stationed in the region lying above the whipping cylinder. It is clear that with such a layout the tipping up of the grille along one side presents not a few problems, on account of the presence in the overlying region of the delivery means of the pasteurizer. Furthermore, the connection between the switching means which are able to interrupt the operation of the machine and the grille may become complex, and hence may in general be liable to damage. The aim of the present invention is therefore to provide a loading device for ice-cream making machines having the same advantages as the known devices, and which does not involve any risk of damage to the structures overlying the hopper, while at the same time being robust, safe and easy to employ.

The subject of the present invention is therefore a loading device for ice-cream making machines or the like of the type indicated earlier, comprising a loading hopper associated with the hatch of the whipping cylinder of an ice-cream making machine and in communication with this cylinder, and a grille for protection of the loading aperture of the said hopper, characterized in that the said grille is connected in a removable manner to the said machine, its connection being made in such a way that, removing the grille actuates switching means which interrupt the operation of the machine, which resumes operation only if the grille is repositioned correctly.

The loading device designed in this way allows subsequent additions of materials to the whipping cylinder even at advanced production. Furthermore, such a device is extremely simple to use and extremely robust.

Further advantages and characteristics of the present invention will become evident from the following description of an embodiment thereof given, for nonlimiting exemplary purposes, with reference to the attached drawings in which:
- Figure 1: is a view in front elevation of the loading device according to the invention;
- Figure 2: is an enlarged view in longitudinal section; and
- Figure 3: is a plan view of the device illustrated in Figure 1.

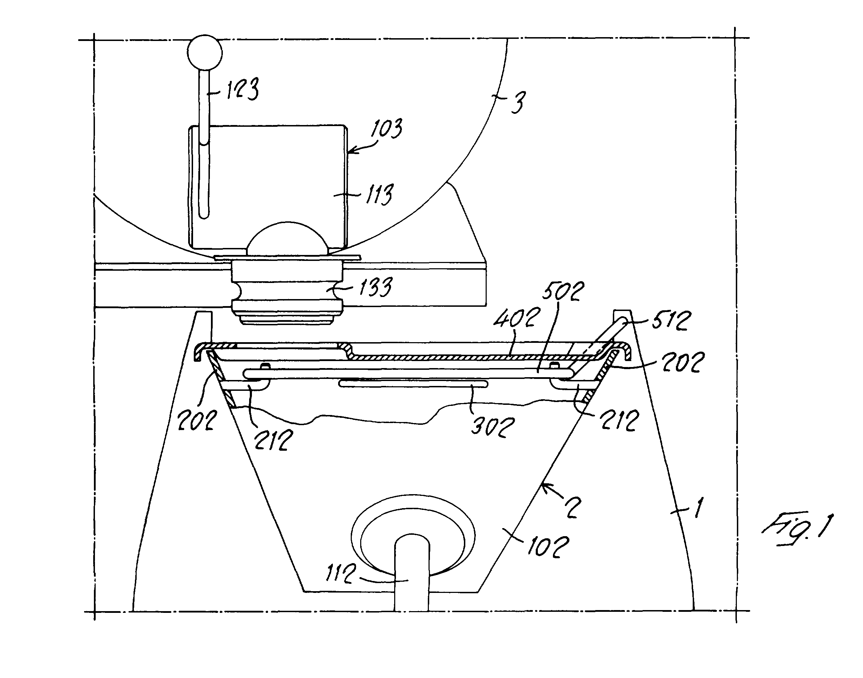

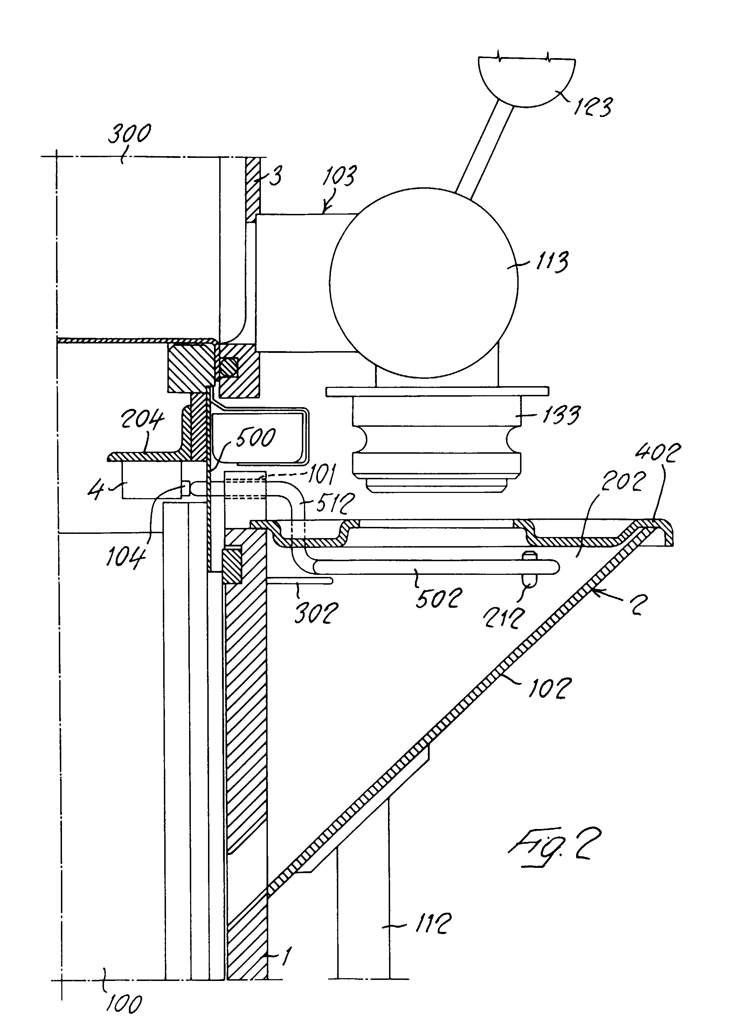

Illustrated in Figure 1, in front elevation, is a machine for making ice-creams of the combined type. Such a machine provides for a whipping cylinder 100 (see Figure 2) fitted at the front with a hatch 1, above which is placed a pasteurizer fitted with a hatch 3. The hatch 1 of the whipping cylinder is equipped with a loading hopper 2 into which can be poured the ice-cream mixture pasteurized in the overlying pasteurizer, and which flows out from the delivery means 103, comprising a cock 113 actuated by a lever 123 and communicating with a discharge spout 133. The delivery means 103 of the hatch 3 of the pasteurizer are positioned in such a way as to deliver the pasteurized ice-cream mixture in the hopper 2 of the hatch 1 of the whipping cylinder. Such a hopper 2, of usual shape, is held in its central wall 102 by the support element 112, whereas the two side walls 202 are connected directly to the hatch 1 of the whipping cylinder. The upper face of the hopper is open, and a cover 402 is placed above it. Below the said cover 402 is placed a safety grille 502, held up by the hooks 212 each projecting from one of the side walls 202 of the hopper, as well as by the bracket 302 projecting from the hatch 1, and fitted with a shank inserted into a hole 101 in the hatch, the purpose of which will be described further on.

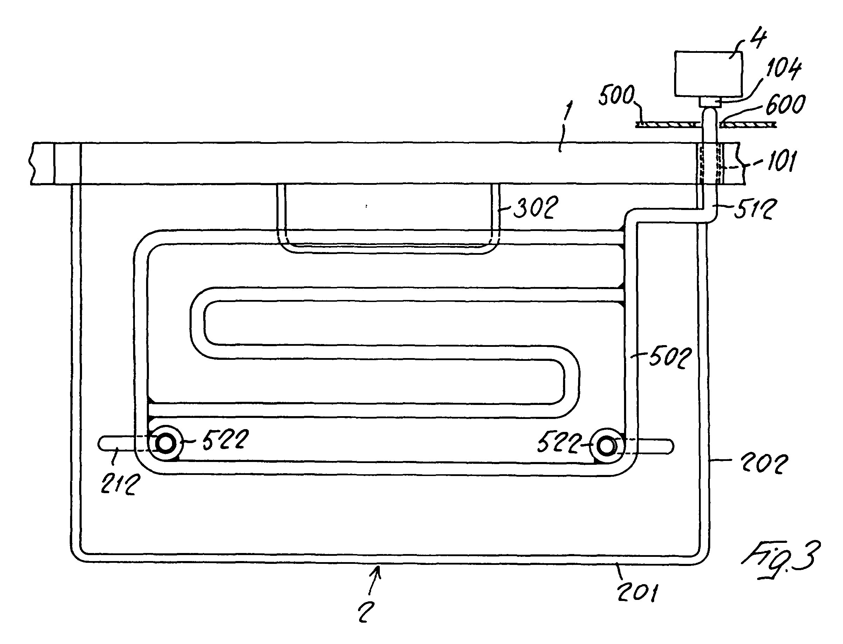

In Figure 2 the parts of the ice-cream machine which are illustrated in Figure 1 are seen in enlarged section. The whipping cylinder 100 together with the pasteurizer 300 may be seen which are fitted at the front with the hatches 1 and 3 respectively. The hatch 3 exhibits the delivery means described above, and the hatch 1 exhibits the loading hopper 2 described earlier, in communication with the whipping cylinder 100 via the pipe 201 which passes through the said hatch 1. The cover 402 of the hopper is held overhanging on one side from the upper edge of the hatch 1, while on three sides it rests on the walls of the said hopper 2. On the other hand the grille 502 is held by the hooks 212 placed on the walls 202 of the hopper 2 and by the bracket 302 projecting from the hatch 1. The shank 512 of the grille 502 is inserted into the hole 101 in the upper end of the hatch 1, and its free end passes through the wall 500 of the frame of the ice-cream machine (see Figure 3), finally encountering the button 104 of a breaker unit 4, connected to the said wall 500 of the frame of the machine by means of connection means 204.

In Figure 3 the hopper 2 and the grille 512 are illustrated in plan. This shows the eyelets 522 connected to the grille 502 which allow the insertion of the hooks 212 bearing the grille. Furthermore, this depicts the way in which the shank 512 comes to press against the button 104 of the switch element 4, passing through both the hole 101 in the hatch 1 and the hole 600 in the wall 500 of the frame of the ice-cream machine.

The operation of the loading device according to the invention will become evident from what follows. The pasteurized ice-cream mixture in 300 is introduced into the whipping cylinder 100 through the delivery means 103 present on the hatch 3 of the pasteurizer 300 and through the hopper 2 placed on the hatch 1 and communicating with the whipping cylinder through the pipe 201; at this point the production of ice-cream can begin. When production is already advanced, it may be necessary to have to add, to the ice-cream being prepared inside the whipping cylinder 100, solid matter such as hazelnut granules, grated chocolate, grated nougat, which if added inside the cylinder 100 with the mixture still liquid would be deposited on the bottom of this cylinder. To act in such a manner it is necessary, for safety reasons, for the machine not to be operating at the time of addition. The user, in this case, will take off the cover 402, and will then unhitch the eyelets of the protection grille 502 from the hooks 212. Next the shank 512 will be extracted from the holes 101 and 600 in the hatch 1 and in the wall 500 respectively. At this point the button 104, through the action of a restoring spring (not shown), will flick into a position such as to cause the switch 4 to interrupt the delivery of energy to the machine. Straightaway, the user will be able to effect the additions which he considers appropriate; then, by re-inserting the shank 512 of the grille 502 into the holes 101 and 600, and then by making the end of the said shank press against the button 104 of the switch 4, he will be able to set the machine into operation again.

In this way, the loading device according to the invention makes it possible to intervene in the loading of the whipping cylinder in the simplest manner, without there being problems related to the fact that the ice-cream machine is of the combined type as illustrated in this case. Such a device is therefore, ignoring the presence of an overlying pasteurizer, more simple, durable and reliable than the devices known in the state of the art.

## Claims

1. Loading device for ice-cream making machines or the like of the batch type, comprising a loading hopper (2) connected to the hatch (1) of the whipping cylinder (100) of an ice-cream making machine and in communication with this cylinder, and a grille (502) for protection of the loading aperture of the said hopper, characterized in that the said grille is connected in a removable manner to the said machine, being provided with switching means (4) which are associated with the said grille (502) and are able to interrupt the operation of the ice-cream machine whenever the grille is removed, this operation being restored when the grille (502) is put back in position.

2. Loading device according to Claim 1, in which the said grille has a shank (512) which can be inserted into two coaxial holes (101, 600) made in the hatch (1) and in the wall (500) of the frame of the machine, respectively, and which can actuate with its end switching means (4) for the operation of the machine.

3. Loading device according to Claim 2, characterized in that the said switching means are a push-button (104) micro-breaker (4) placed inside the frame of the said machine, the axis of the said push-button (104) being aligned with the axis of the said holes (101, 600).

4. Loading device according to the preceding claims, in which the said grille (502) is placed in protection of the loading aperture of the hopper (2) held by at least two hooks (212) projecting from the internal faces of the side walls (202) of the said hopper (2), and by a bracket (302) projecting from the external face of the hatch (1).

5. Device according to the preceding claims, in which the said ice-cream making machine is a machine of combined type, comprising a pasteurizer (300) placed above a whipping cylinder (100), the said loading device being placed immediately beneath the delivery means (103) provided on the hatch (3) of the said pasteurizer (300).

## Patentansprüche

1. Ladevorrichtung für Speiseeis herstellende Maschinen oder dergleichen des Chargentyps, umfassend einen Ladetrichter (2), der mit einer Klappe (1) eines Schaumzylinders (100) einer Speiseeis herstellenden Maschine verbunden ist und mit diesem Zylinder in Verbindung steht, und ein Gitter (502) zum Schutz der Ladeöffnung des Trichters, dadurch gekennzeichnet, daß das Gitter auf entfernbare Weise mit der Maschine verbunden ist, die mit Schaltmitteln (4) versehen ist, die mit dem Gitter (502) verbunden und fähig sind, den Betrieb der Maschine zu unterbrechen, wenn das Gitter entfernt wird, wobei dieser Betrieb wieder aufgenommen wird, wenn das Gitter (502) zurück in seine Position gesetzt wird.

2. Ladevorrichtung nach Anspruch 1, dadurch gekennzeichnet, daß das Gitter einen Schaft (512) aufweist, der in zwei koaxiale in der Klappe (1) bzw. in der Wand (500) des Rahmens der Maschine vorgesehene Löcher (101, 600) einfügbar ist, und der mit seinem Ende Schaltmittel (4) zum Betrieb der Maschine betätigen kann.

3. Ladevorrichtung nach Anspruch 2, dadurch gekennzeichnet, daß die Schaltmittel ein Druckknopf (104) eines Mikro-Unterbrechers (4) sind, der innerhalb des Rahmens der Maschine positioniert ist, und die Achse des Druckknopfes (104) mit der Achse der Löcher (101, 600) ausgerichtet sind.

4. Ladevorrichtung nach einem der vorhergehenden Ansprüche, dadurch gekennzeichnet, daß das Gitter (502) zum Schutz der Ladeöffnung des Trichters (2) positioniert ist, der durch mindestens zwei Haken (212), die von inneren Flächen der Seitenwände (202) des Trichters (2) hervorstehen, und durch eine Klammer (302) gehalten ist, die von der äußeren Fläche des Trichters (1) hervorsteht.

5. Ladevorrichtung nach einem der vorhergehenden Ansprüche, dadurch gekennzeichnet, daß die Speiseeis herstellende Maschine eine Maschine vom kombinierten Typ ist, die einen Pasteurisierer (300), der oberhalb eines Schaumzylinders (100) angeordnet ist, umfasst, wobei die Ladevorrichtung unmittelbar neben den Ausgabemitteln (103) angeordnet ist, die an der Klappe (3) des Pasteurisierers (300) vorgesehen ist.

## Revendications

1. Dispositif de chargement pour des machines à faire de la crème glacée ou analogue du type par fournée, comportant une trémie (2) de chargement reliée au fouet (1) du cylindre (100) batteur d'une machine à faire de la crème glacée et en communication avec le cylindre, et une grille (502) pour protéger l'ouverture de chargement de la trémie, caractérisé en ce que la grille est reliée d'une manière amovible à la machine, en étant munie de moyens (4) de commutation qui sont associés à la grille (502) et sont capables d'interrompre le fonctionnement de la machine à faire de la crème glacée chaque fois que la grille est retirée, ce fonctionnement étant restauré lorsque la grille (502) est ramenée en position.

2. Dispositif de chargement suivant la revendication 1, dans lequel la grille comporte une tige (512) qui peut être insérée dans deux trous (101, 600) coaxiaux réalisés dans le fouet (1) et dans la paroi (500) du cadre de la machine, respectivement, et qui peut actionner avec son extrémité des moyens (4) de commutation pour le fonctionnement de la machine.

3. Dispositif de chargement suivant la revendication 2, caractérisé en ce que les moyens de commutation sont un micro-disjoncteur (4) à bouton (104) de poussée placé à l'intérieur du cadre de la machine, l'axe du bouton (104) de poussée étant aligné avec l'axe des trous (101, 600).

4. Dispositif de chargement suivant l'une des revendications précédentes, dans lequel la grille (502) est placée de manière à protéger l'ouverture de chargement de la trémie (2) maintenue par au moins deux crochets (212) faisant saillie des faces intérieures des parois (202) latérales de la trémie (2) et par un support (302) faisant saillie de la face extérieure du fouet (1).

5. Dispositif suivant l'une des revendications précédentes, dans lequel la machine à faire de la crème glacée est une machine du type combinée, comportant un dispositif (300) de pasteurisation placé au-dessus d'un cylindre (100) batteur, le dispositif de chargement étant placé immédiatement en dessous des moyens (103) de sortie disposés sur le fouet (3) du dispositif (300) de pasteurisation.
